# EUROPÄISCHE PATENTSCHRIFT

(11) **EP 4 222 846 B1**
(45) Veröffentlichungstag und Bekanntmachung des Hinweises auf die Patenterteilung: **04.03.2026**
(21) Anmeldenummer: 21783207.0
(22) Anmeldetag: 23.09.2021
(51) Int. Cl.: H02K 15/00, H02K 3/12, H02K 15/04

(54) **FERTIGUNGSVORRICHTUNG FÜR EINE SPULE EINER ELEKTRISCHEN MASCHINE**
COIL OF AN ELECTRIC MACHINE AND MEANS FOR PRODUCTION OF SAME
BOBINE D'UNE MACHINE ÉLECTRIQUE ET SON MOYEN DE FABRICATION

(30) Priorität: 30.09.2020 EP 20199130
(43) Veröffentlichungstag der Anmeldung: 09.08.2023
(73) Patentinhaber: Flender GmbH, 46395 Bocholt (DE)
(72) Erfinder: SCHÖNBAUER, Norbert, 94072 Bad Füssing (DE); STRASSINGER, Tobias, 94136 Thyrnau (DE); TERINGL, Claus, 94060 Pocking (DE); WINKLHOFER, Michael, 94060 Pocking (DE)
(74) Vertreter: Michalski Hüttermann & Partner Patentanwälte mbB
(86) Internationale Anmeldenummer: PCT/EP2021/076220
(87) Internationale Veröffentlichungsnummer: WO 2022/069342

(56) Entgegenhaltungen:
- EP-A1- 1 005 137
- DE-A1- 102010 028 869
- JP-A- 2010 273 485
- JP-A- 2013 183 543
- JP-A- 2013 251 995
- JP-A- 2013 251 996
- KR-A- 20120 053 179
- US-A- 4 450 708

## Beschreibung

Die Erfindung betrifft eine Fertigungsvorrichtung für eine Spule, zur Umlenkung einer Spule, wobei für die Umlenkung ein Formkörper vorgesehen ist, wobei der Formkörper einen ersten Abschnitt aufweist, welcher einen Kreisbogen darstellt und einen zweiten Abschnitt aufweist, welche eine Kreissehne darstellt.

Elektrische Maschinen bestehen oft aus einem Stator und einen Rotor, wobei der Stator Statornuten aufweist, in die eine Statorwicklung eingebracht ist, und wobei die Statorwicklung Spulen aufweist.

Statoren bzw. Statorsegmente dynamoelektrischer Maschinen weisen insbesondere in einem geschichteten Blechpaket Spulen auf, um durch elektromagnetische Wechselwirkung mit einem Rotor eine Arbeitsmaschine anzutreiben bzw. durch den angetriebenen Rotor elektrische Energie zu erzeugen. Spulen werden in Nuten eines Blechpakets einer dynamoelektrischen Maschine positioniert.

Die Ausbildung eines Wickelkopfes durch die Spulen (Formoder Zahnspulen) ist schwierig, insbesondere bei dynamoelektrischen Maschinen großer Leistungsklasse (größer 1 MW). Als Beispiel hierfür seien Generatoren für Windkraftanlagen und Gezeitenkraftwerke genannt, die zur Umwandlung mechanischer Energie in elektrische Energie verwendet werden. Motoren große Leistungen finden sich beispielsweise bei Bahnantrieben, Kompressoren oder Pumpen.

Elektrische Maschinen im höheren Leistungsbereich sind häufig mit so genannten Formspulen ausgeführt, wie sie beispielsweise aus der DE 195 29 970 C1 bekannt sind. Hierbei handelt es sich um vorgeformte Leiterbündel, die mit einem in der Regel streifenförmigen Isoliermaterial umwickelt sind. Zur Herstellung einer Formspule wird üblicherweise zunächst eine Rohspule gewickelt und anschließend derart gespreizt, dass sie in Nuten des Ständers eingelegt werden kann.

Die Spule einer Statorwicklung einer elektrischen Maschine weist beispielsweise eine Anzahl von Windungen auf, die gemeinsam mit einer Anzahl von Schichten eines Glimmerbandes bewickelt sind, auf die wiederum eine Anzahl von Schichten eines Deckbandes gewickelt ist, wobei die Spule als dreidimensionale Formspule ausgebildet ist.

Bei als Formspulen ausgebildeten Spulen ist es bekannt, zunächst eine plane Spule zu fertigen, die aufgrund ihrer Form üblicherweise als race-track-Schleife (zwei lange Geraden, die über insbesondere zwei halbkreisförmig gebogene Abschnitte miteinander verbunden sind) bezeichnet wird. Diese Spule wird durch einen Formgebungsprozess in die Formspule umgeformt. Bei Formspulen können beim Spulen ziehen sogenannte Formplatten zur Formung der Wickelköpfe verwendet werden. Jedoch ist dies bei Spulen mit sehr kurzen Wickelköpfen Maschinentechnisch begrenzt nicht mehr möglich, und eine optimale/saubere Wickelkopfform ist nicht mehr gegeben bzw. kann ohne Platten nicht gefertigt werden. Ein weiteres Problem kann sich durch das Ziehen ergeben, wenn sich dadurch die einzelnen Wicklungen einer Spule wieder voneinander beabstanden.

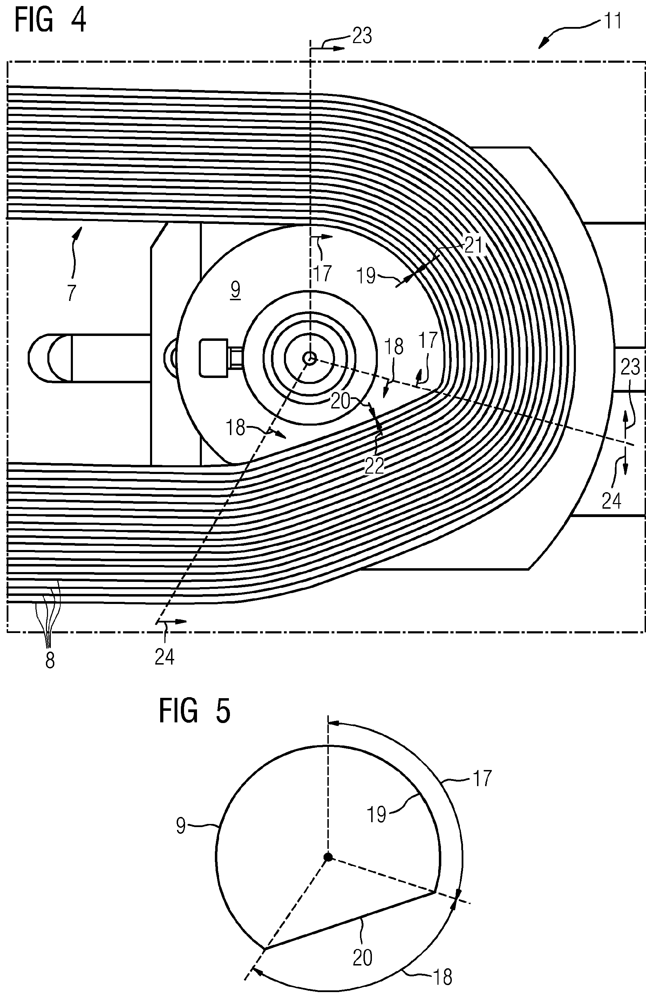

Aus der JP 2013 251 995 A ist eine Fertigungsvorrichtung für eine Spule bekannt, die zur Umlenkung einer Spule einen Formkörper vorsieht, wobei der Formkörper einen ersten Abschnitt aufweist, welcher einen Kreisbogen darstellt und einen zweiten Abschnitt aufweist, welche eine Kreissehne darstellt. Diese Vorrichtung bildet den Oberbegriff des Anspruchs 1. Der Formkörper zum Biegen der Spule ist dort in dem Bereich, in dem die zu verformende Spule oder deren Windungen anliegen, kreisförmig. Er ist in dem Bereich, wo keine Spule oder Wicklung anliegt, wie die Fig. 4 bis 8 zeigen, gerade oder als Kreissehne ausgebildet. Zieht man so geformte Spulen zum Wickelkopf, kann sich eine bauchige Auswölbung ergeben, die es eigentlich zu vermeiden gilt.

Ausgehend davon ist es deshalb eine Aufgabe der Erfindung, ein verbessertes Ziehen der Formspule mit verringerter Auswölbung oder Aufspreizung zu ermöglichen.

Eine Lösung der Aufgabe ergibt sich bei einer Fertigungsvorrichtung nach Anspruch 1 oder Anspruch 2. Weitere Lösungen der Aufgabe ergeben sich bei einem Verfahren nach den Ansprüchen 3 bis 6. Eine weitere Lösung der Aufgabe ergibt sich bei einem Stator nach Anspruch 7. Ausgestaltungen dieser Lösungen ergeben sich auch gemäß einer der nachfolgend beschriebenen Variationen von Ausgestaltungen in der Beschreibung.

Bei einer Fertigungsvorrichtung für eine Spule, zur Umlenkung einer Spule, ist für die Umlenkung ein Formkörper vorgesehen, wobei der Formkörper einen ersten Abschnitt aufweist, welcher einen Kreisbogen darstellt und einen zweiten Abschnitt aufweist, welcher eine Kreissehne darstellt, wobei beide Abschnitte zum Anlegen der Spule vorgesehen sind. Der erste Abschnitt und der zweite Abschnitt sind dazu vorgesehen, dass an diesen die Spule beim Biegen geführt ist und die Spule durch das Biegen abschließend an dem ersten Abschnitt und an dem zweiten Abschnitt anliegt. Das Biegen der Spule erfolgt insbesondere in einem Winkel von 180°, also so, dass die Spule in eine erste Nut eines Stators einer elektrischen Maschine eingelegt werden kann und auch in eine weitere Nut eingelegt werden kann. So kann die Spule zu einer Stirnseite des Stators hingeführt werden und nach der Umlenkung von 180° zurückgeführt werden. Die Umlenkung der Spule auf einer Stirnseite des Blechpaketes des Stators bildet einen Wickelkopf. Erfindungsgemäß ist der erste Abschnitt zum Anlegen der Spule vorgesehen und auch der zweite Abschnitt zum Anlegen der Spule vorgesehen. Der erste Abschnitt und der zweite Abschnitt grenzen aneinander an. Der erste Abschnitt und der zweite Abschnitt haben eine Höhe, die zumindest der Höhe der Spule entspricht.

In einer bevorzugten Ausführung ist eine erfindungsgemäße Fertigungsvorrichtung für eine Spule dadurch gekennzeichnet, dass der erste Abschnitt einen Umfangswinkel zwischen 80° und 120°, bevorzugt zwischen 90° und 110°, besonders bevorzugt um 105°, und der zweite Abschnitt einen Umfangswinkel zwischen 90° und 130°, bevorzugt zwischen 100° und 120°, besonders bevorzugt um 115°, aufweist. Diese Maße ergeben besonders gute Ergebnisse beim Umbiegen zum Wickelkopf und verhindern ein Aufspreizen der einzelnen Schichten. Die Kreissehnung formt den Wickelkopf vor. Die Sehnung im Formkörper ist vorteilhaft, wenn keine Platten bei der Umformung verwendet werden können.

Erfindungsgemäß ist der Formkörper beim Biegen der Spule so ausgerichtet, dass die Kreissehne des zweiten Abschnitts gegenüber der Spulenlängsrichtung einen Winkel zwischen 5° und 45°, bevorzugt zwischen 10° und 30°, weiter bevorzugt zwischen 15° und 25°, besonders bevorzugt um 20°, aufweist. Wie der Formkörper dort ausgestaltet ist, wo beim Biegen keine Windungen oder andere Spulenelemente anliegen, ist unwichtig. Relevant ist allein, dass dort, wo die Windungen oder die Spulenelemente anliegen, erst eine Kreisform (ein Stück Kreis oder ein Kreissegment) und dann eine sich anschließende Gerade zum Ausbilden der günstigen Form vorliegen. Ebenso möglich ist, dass erst eine Gerade (ein Stück Gerade) vorliegt, dem sich dann ein Stück Kreisform (Kreissegment) anschließt.

Durch die Fertigungseinrichtung ergibt sich mit einem Wickeltool (Formkörper) zur Vorformung von Formspulen die Möglichkeit eine kurze Wickelkopflänge zu erzielen. Durch eine verkürzte Wickelkopflänge können kürzere elektrische Maschinen gebaut werden. Dies ist beispielsweise bei Windkraftgeneratoren oder bei Schiffsantrieben vorteilhaft. Durch das Wickeltool (Formkörper) mit den unterschiedlichen Abschnitten zum Anlegen der Spule beim Biegen ist es auch möglich eine Spule derart vor zu biegen, dass bei einem anschließenden Ziehen der Spule in die gewünschte Form des Wickelkopfes sich ein Aufspreizen der Windungen der Spule im Bereich des Wickelkopfes zumindest reduzieren lässt. Durch einen Formkörper (Wickeltool) der nicht rund ist, wie beim Standard wickeln, sondern durch einen Formkörper, der eine Schräge (Kreissehne) aufweist, lässt sich das Ziehen der Spule positiv beeinflussen. Diese Schräge formt den Teil der Spule schon vor dem Ziehen beim Wickeln vor, und ersetzt somit Problemlösungen wie ein Zurechtklopfen von Windungen der Spule. Nach dem Ziehen entspricht die Wickelkopfform insbesondere der einer Spule, die mit Formplatten gefertigt wurde oder gefertigt werden hätte sollen, ohne zusätzlichen Aufwand zu erzeugen.

Nach einem Verfahren zur Herstellung einer Spule, wobei die Spule eine Vielzahl von Windungen aufweist, wird die Spule über einen Formkörper nach Anspruch 1 gebogen, wobei ein erster Abschnitt ausgebildet wird, welcher einen Kreisbogen darstellt und ein zweiter Abschnitt ausgebildet wird, welcher eine Kreissehne darstellt. Durch den Formkörper wird also bei der Spule der erste Abschnitt ausgebildet und der zweite Abschnitt ausgebildet. Der erste Abschnitt und der zweite Abschnitt folgen insbesondere unmittelbar aufeinander. Damit formt die Spule die Form des Formkörpers ab.

Gemäß einer Ausgestaltung des Verfahrens weist also der Formkörper einen ersten Formkörper-Abschnitt auf, welcher einen Kreisbogen darstellt und einen zweiten Formkörper-Abschnitt, welcher eine Kreissehne darstellt. Die Form des Formkörpers und die Form der geformten (gebogenen) Spule entsprechen sich.

In einer Ausgestaltung des Verfahrens wird die Spule derart gezogen, dass die Spule im zweiten Abschnitt mit Kreissehnenform, Windungen aufweist, deren Abstand zueinander kleiner ist als ein Abstand zueinander bei einer Kreisbogenform im zweiten Abschnitt. Diese Kreisbogenform im zweiten Abschnitt stellt die bekannte Fertigung dar. Bei der bekannten Fertigung sind also der erste Abschnitt und der zweite Abschnitt als Kreisbogen ausgebildet, wobei beide Kreisbögen einen gemeinsamen Kreisbogen bilden und somit eigentlich keine zwei Abschnitte vorhanden sind und auch nicht bekannt sind.

Durch den zweiten Abschnitt mit der Kreissehnenform biegen sich die Windungen der Spule durch das Ziehen also nicht mehr so auf, wie bei einer vorgegebenen Kreisbogenform der Spule vor dem Ziehen. Damit kann der Wickelkopf beispielsweise kompakter ausgeführt werden. Auch die Isolierung der Spule wird im Bereich des Wickelkopfes einfacher.

In einer Ausgestaltung des Verfahrens wird durch die Spule durch das Ziehen im Bereich des Wickelkopfes eine kontinuierliche Steigung ausgebildet. Dies ergibt sich dadurch, dass sich die Windungen zumindest nicht mehr so stark aufspreizen. Die Steigung ergibt sich durch eine radiale Betrachtung von innen nach außen.

Bei der Durchführung des Verfahrens wird insbesondere eine der beschriebenen Fertigungseinrichtungen verwendet.

Ein Stator einer elektrischen Maschine weist eine Spule auf, welche entsprechend einem der Verfahren der Ansprüche 4 bis 8 kreisbogenförmig und kreissehnenförmig vorgebogen ist. Bei der Fertigung des Stators wird also eine derartige vorgebogene bzw. vorgeformte Spule verwendet. Durch die Verwendung derartiger Spulen ergibt sich eine verbesserte Herstellung des Wickelkopfes der elektrischen Maschine. Zur Herstellung des Wickelkopfes werden die vorgebogenen (vorgeformten) Spulen gezogen. Zur Herstellung der elektrischen Maschine werden also insbesondere Spulen verwendet, welche nach einem der beschriebenen Verfahren vorgefertigt sind.

Die Erfindung sowie weitere vorteilhafte Ausgestaltungen der Erfindung werden anhand prinzipiell dargestellter Ausführungsbeispiele nachfolgend näher erläutert. Darin zeigen:
- FIG 1: eine elektrische Maschine;
- FIG 2: eine Spule welche mittels eines kreisförmigen Formkörpers vorgeformte ist;
- FIG 3: einen kreisförmigen Formkörper;
- FIG 4: eine Fertigungsvorrichtung;
- FIG 5: einen Formkörper mit segmentierter Form,
- FIG 6: eine Spule welche mittels eines Formkörpers mit segmentierter Form vorgeformte ist;
- FIG 7: eine weitere Spule welche mittels eines Formkörpers mit segmentierter Form vorgeformte ist, und
- FIG 8: einen weiteren Formkörper.

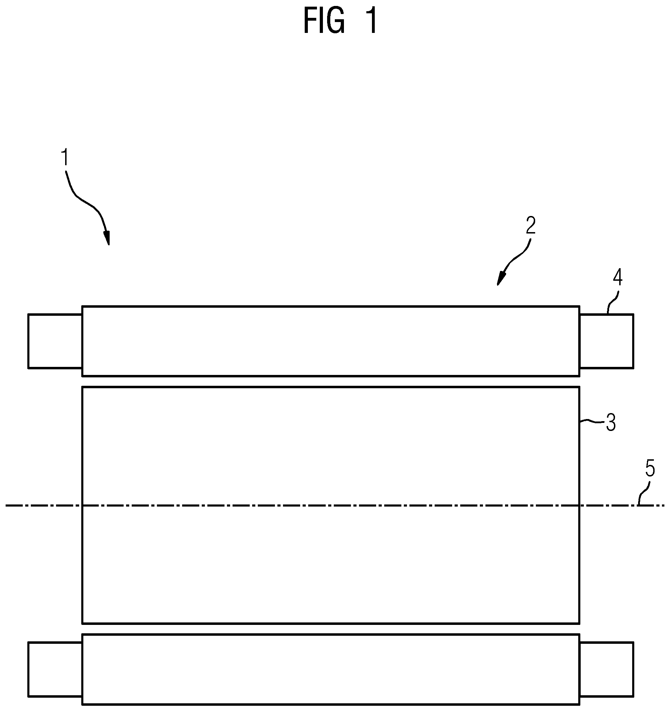

Die Darstellung nach Figur 1 zeigt eine elektrische Maschine 1 welche einen Stator 2 und einen Rotor 3 aufweist. Der Stator 2 weist Wickelköpfe 4 auf. Der Rotor 3 ist um eine Achse 5 drehbar gelagert.

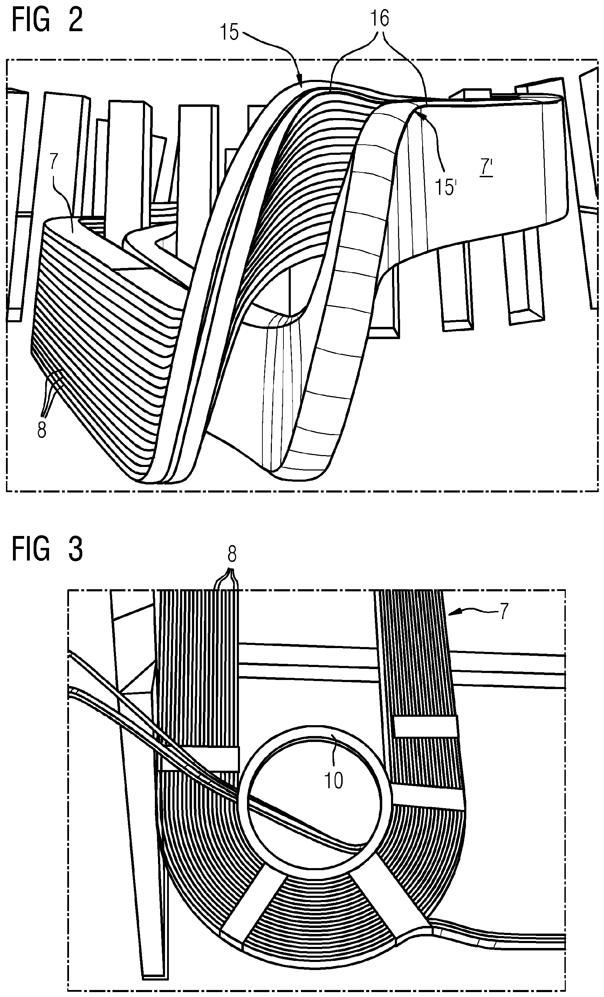

Die Darstellung nach Figur 2 zeigt Spulen 7, 7' nach dem Stand der Technik, welche der Ausbildung eines Wickelkopfes dienen. Die Spulen 7, 7' weisen Windungen 8 auf. Für die Windungen 8 werden insbesondere Bänder verwendet. Die Spule 7 weist noch keine Bandage auf. Die Spule 7' weist eine Bandage auf, ist also bandagiert, wobei darauf hingewiesen sei, dass die Erfindung mit und ohne Bandagierung funktioniert. Durch das Ziehen der Spule 7, 7' zum Wickelkopf ergibt sich eine bauchige Auswölbung 15, 15' die es zu vermeiden gilt. Die Auswölbung 15, 15' ist auch durch den eingezeichneten Konturen 16 erkennbar. Mit der Auswölbung ergibt sich auch eine Aufspreizung der Windungen 8 in diesem Bereich. Die hier genannte Auswölbung findet bei 15 und 15' in Richtung Nut statt(in der Fig 2 rechts an der Spule entlang am "geraden" Teil des Wickelkopfes).

Die Darstellung nach Figur 3 zeigt symbolisiert, wie die Spulen 7, 7' im Stand der Technik nach Figur 1 vorgefertigt wurden. Figur 3 zeigt symbolisiert einen kreisrunden Formkörper 10. Um einen derartigen kreisrunden Formkörper 10 wird nach bekannter Weise die Spule 7 gebogen. Die Spule 7 wird um den Formkörper 10 gelenkt (umgelenkt).

Die Darstellung nach Figur 4 zeigt im Gegensatz zu Figur 3 nunmehr das erfindungsgemäße Vorgehen bzw. den erfindungsgemäßen Formkörper 9. Dies trifft entsprechend auch auf Figur 5 zu. Der Formkörper 9 der Formkörper 9 weist in dem Bereich, an dem die Spule beim Biegen angelegt wird, einen Kreisbogen 19 und eine (hier sich anschließende) Kreissehne 20 auf. Da die Spule 7 über den Formkörper 9 gebogen wird, weist auch die Spule 7 einen korrespondierenden Kreisbogen 21 und eine korrespondierende Kreissehne 22 auf. Daraus ergeben sich für die Spule 7 ein erster Abschnitt 23 und ein zweiter Abschnitt 24 sowie für den Formkörper 9 ein erster Abschnitt 17 und ein zweiter Abschnitt 18.

Gut zu erkennen ist, dass hier der erste Abschnitt 17 einen Umfangswinkel um 105°, und der zweite Abschnitt 18 einen Umfangswinkel um 115° aufweist. Diese Winkel bestimmen die Form der hergestellten Spule 7, während der Bereich links in der Figur 4, der beim Biegen keine Rolle spielt, beliebig geformt sein kann. Er ist hier rund geformt, könnte aber auch anders geformt sein.

Zu erkennen ist auch, dass der Formkörper 9 beim Biegen der Spule 7 so ausgerichtet ist, dass die Kreissehne 20 des zweiten Abschnitts 18 gegenüber der Spulenlängsrichtung einen Winkel um 20° - wie hier in Fig. 4 - aufweist. 20° ist hier beispielhaft der Winkel zwischen der Kreissehne 20 und der Waagrechten, die die Richtung der Spulenhauptachse angibt Der Formkörper 9 ist also "asymmetrisch" in dem Sinn eingebaut, dass die von oben links kommenden Windungen 8 erst an dem Kreisbogen 19 geformt werden und dann sofort an der sich anschließenden, unten schräg liegenden Kreissehne 20 mehr oder weniger gerade weiterverlaufend geformt werden, bis sie schließlich unten links wieder ins Gerade der Spulenhauptrichtung oder -achse verlaufen. Das so halb gekrümmt und halb gerade vorgeformte Spulenelement mit Kreisbogen 21 und Kreissehne 22 eignet sich besonders gut zum Weiterverformen zum Wickelkopf.

Die Darstellung nach Figur 5 zeigt den Formkörper nach Figur 4 in schematisierter Form mit dem Kreisbogen 19 im ersten Abschnitt 17 und der Kreissehne 20 im zweiten Abschnitt 18. Der Kreisbogen 19 befindet sich in einem ersten Abschnitt 17, dem ersten Formkörper-Abschnitt. Die Kreissehne 20 befindet sich in einem zweiten Abschnitt 18, dem zweiten Formkörper-Abschnitt.

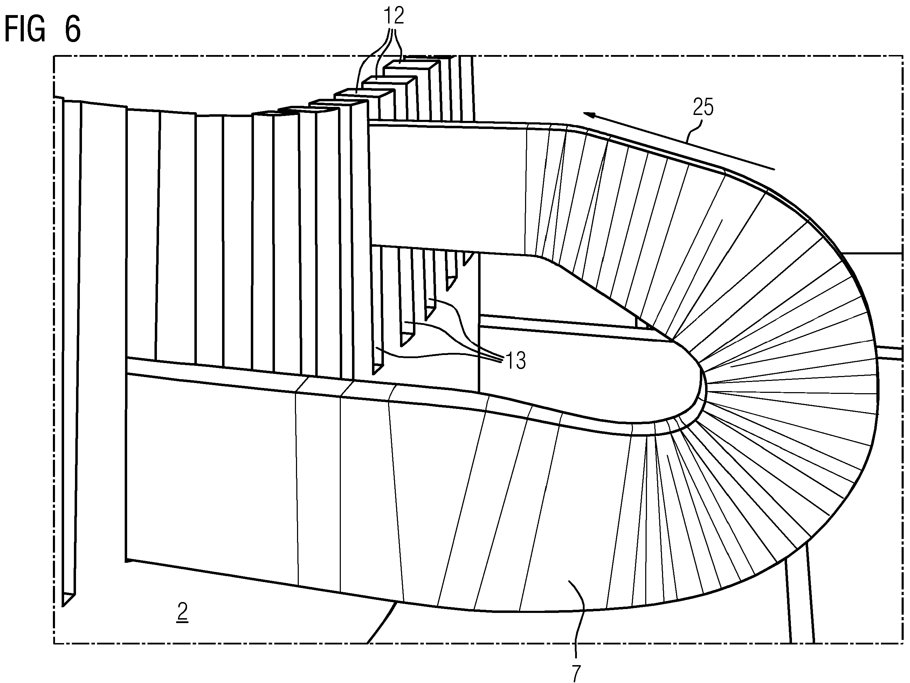

Die Darstellung nach Figur 6 zeigt eine Spule 7 welche bandagiert ist. Die Spule 7 ist in Nuten 13 gelegt, wobei die Nuten 13 durch Zähne 12 ausgebildet sind. Die Spule 7 nach Figur 6 ist mittels eines Formkörpers vorgeformt, welche eine Kreissehne und einen Kreisbogen aufweist.

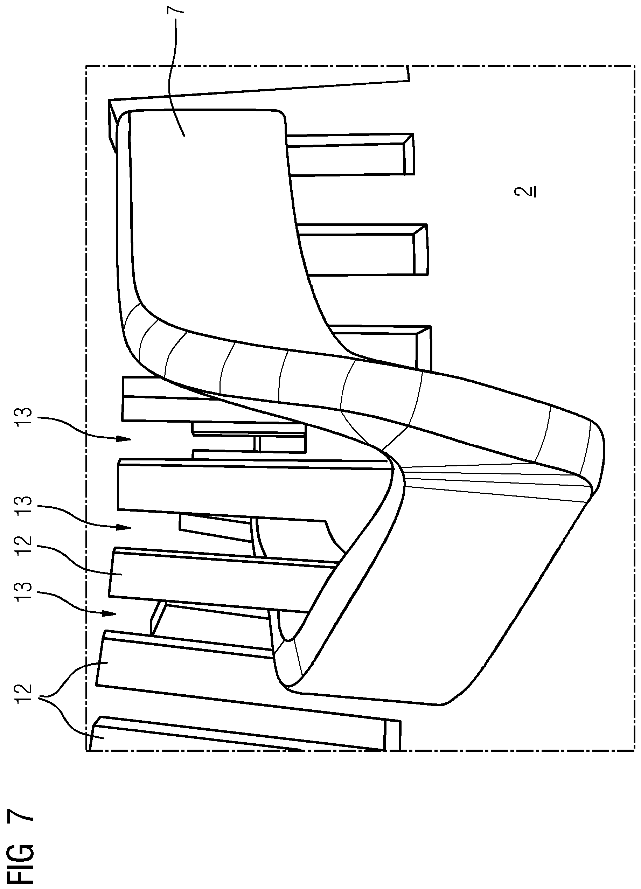

Die Darstellung nach Figur 7 zeigt die Spule 7 nach Figur 6 aus einer anderen Perspektive.

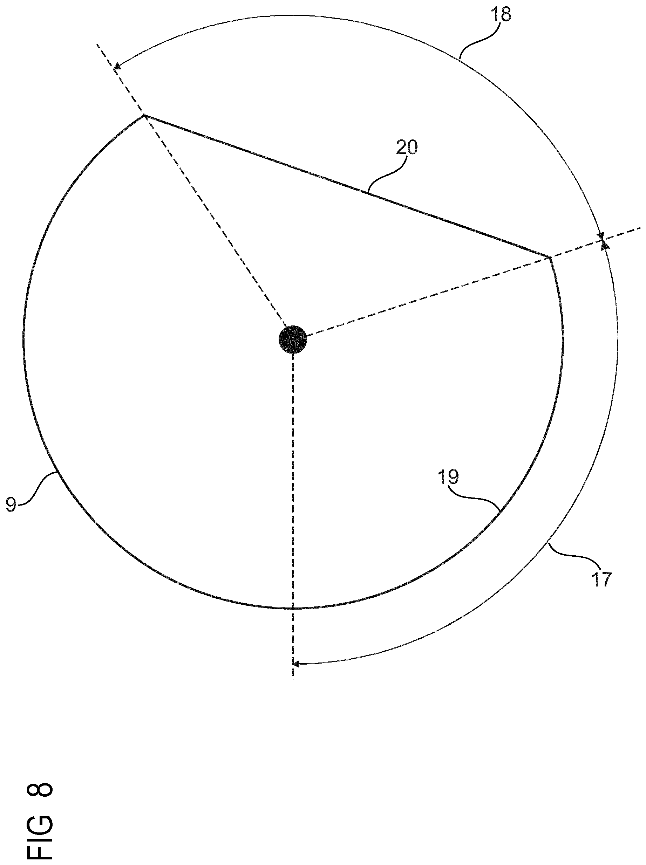

Die Darstellung nach Figur 8 zeigt einen weiteren Formkörper 9, der bei der Erfindung verwendbar ist. Dieser Formkörper 9 in schematisierter Form ist spiegelbildlich zu dem Formkörper 9 der Fig. 5 aufgebaut, wobei der erste Abschnitt 18 und der zweite Abschnitt 17 in ihrer Reihenfolge miteinander vertauscht sind. Er besitzt einen Kreisbogen 19 im zweiten Abschnitt 17 und eine Kreissehne 20 im ersten Abschnitt 18. Der Kreisbogen 19 befindet sich hier im zweiten Abschnitt 17, dem zweiten Formkörper-Abschnitt. Die Kreissehne 20 befindet sich im ersten Abschnitt 18, dem ersten Formkörper-Abschnitt.

## Patentansprüche

1. Fertigungsvorrichtung (11) für eine Spule (7), zur Umlenkung einer Spule (7), wobei für die Umlenkung ein Formkörper (9) vorgesehen ist, wobei der Formkörper (9) einen ersten Abschnitt (17) aufweist, welcher einen Kreisbogen (19) darstellt und einen zweiten Abschnitt (18) aufweist, welche eine Kreissehne (20) des genannten Kreisbogens (19) darstellt, **dadurch gekennzeichnet, dass** sowohl der erste Abschnitt (17) als auch der zweite Abschnitt (18) zum Anlegen der Spule (7) vorgesehen sind, und dass der Formkörper (9) beim Biegen der Spule (7) so ausgerichtet ist, dass die Kreissehne (20) des zweiten Abschnitts (18) gegenüber der Spulenlängsrichtung einen Winkel zwischen 5° und 45°, bevorzugt zwischen 10° und 30°, weiter bevorzugt zwischen 15° und 25°, besonders bevorzugt um 20°, aufweist.

2. Fertigungsvorrichtung (11) für eine Spule (7) nach Anspruch 1, **dadurch gekennzeichnet, dass** der erste Abschnitt (17) einen Umfangswinkel zwischen 80° und 120°, bevorzugt zwischen 90° und 110°, besonders bevorzugt um 105°, und der zweite Abschnitt (18) einen Umfangswinkel zwischen 90° und 130°, bevorzugt zwischen 100° und 120°, besonders bevorzugt um 115°, aufweist.

3. Verfahren zur Herstellung einer Spule (7), wobei die Spule (7) eine Vielzahl von Windungen (8) aufweist, wobei die Spule über einen Formkörper (9) nach Anspruch 1 gebogen wird, wobei durch Anlegen an den ersten Abschnitt (17) des Formkörpers (9) ein erster Abschnitt (23) ausgebildet wird, welcher einen Kreisbogen (21) darstellt und durch Anlegen an den zweiten Abschnitt (18) des Formkörpers (9) ein zweiter Abschnitt (24) ausgebildet wird, welcher eine Kreissehne (22) darstellt, und der Kreisbogen (21) und die Kreissehne (22) aneinander grenzen.

4. Verfahren nach Anspruch 3, wobei die Spule (7) gezogen wird, wobei die Spule (7) im zweiten Abschnitt (24) mit Kreissehnenform Windungen (8) aufweist, deren Abstand zueinander kleiner ist als ein Abstand zueinander bei einer Kreisbogenform im zweiten Abschnitt.

5. Verfahren nach einem der Ansprüche 3 oder 4, wobei die Spule (7) durch das Ziehen im Bereich des Wickelkopfes eine kontinuierliche Steigung (25) ausbildet.

6. Verfahren nach einem der Ansprüche 3 bis 5, wobei eine Fertigungseinrichtung (11) nach einem der Ansprüche 1 oder 2 verwendet wird.

7. Stator (2) einer elektrischen Maschine (1), welcher eine Spule (7) aufweist, welche entsprechend einem der Verfahren der Ansprüche 3 bis 6 kreisbogenförmig und kreissehnenförmig vorgebogen ist.

## Claims

1. Manufacturing device (11) for a coil (7), for deflecting a coil (7), wherein a shaped body (9) is provided for deflection, wherein the shaped body (9) has a first portion (17), which represents a circular arc (19), and has a second portion (18), which represents a chord (20) of said circular arc (19), **characterized in that** both the first portion (17) and the second portion (18) are provided for placing the coil (7), and **in that** the shaped body (9) is aligned when bending the coil (7) in such a way that the chord (20) of the second portion (18), with respect to the longitudinal coil direction, has an angle between 5° and 45°, preferably between 10° and 30°, further preferably between 15° and 25°, particularly preferably of around 20°.

2. Manufacturing device (11) for a coil (7) according to Claim 1, **characterized in that** the first portion (17) has a circumferential angle between 80° and 120°, preferably between 90° and 110°, particularly preferably of around 105°, and the second portion (18) has a circumferential angle between 90° and 130°, preferably between 100° and 120°, particularly preferably of around 115°.

3. Method for producing a coil (7), wherein the coil (7) has a multiplicity of windings (8), wherein the coil is bent over a shaped body (9) according to Claim 1, wherein a first portion (23) is formed by placing on the first portion (17) of the shaped body (9), which represents a circular arc (21), and a second portion (24) is formed by placing on the second portion (18) of the shaped body (9), which represents a chord (22), and the circular arc (21) and the chord (22) are adjacent to each one another.

4. Method according to Claim 3, wherein the coil (7) is drawn, wherein the coil (7) in the second portion (24) with chord shape has windings (8), the mutual spacing of the latter being smaller than a mutual spacing in a circular arc shape in the second portion.

5. Method according to one of Claims 3 or 4, wherein the coil (7), due to the drawing, forms a continuous slope (25) in the region of the end winding.

6. Method according to one of Claims 3 to 5, wherein a manufacturing device (11) according to one of Claims 1 or 2 is used.

7. Stator (2) of an electric machine (1), which has a coil (7) which is pre-bent in the shape of a circular arc and in the shape of a chord according to one of the methods of Claims 3 to 6.

## Revendications

1. Dispositif de fabrication (11) pour une bobine (7), pour la déviation d'une bobine (7), dans lequel un corps façonné (9) est prévu pour la déviation, dans lequel le corps façonné (9) présente une première section (17) qui constitue un arc de cercle (19) et une deuxième section (18) qui constitue une corde de cercle (20) dudit arc de cercle (19), **caractérisé en ce que** tant la première section (17) que la deuxième section (18) sont prévues pour l'application de la bobine (7), et **en ce que** le corps façonné (9), lorsque la bobine (7) est pliée, est orienté de telle sorte que la corde de cercle (20) de la deuxième section (18) présente un angle compris entre 5 ° et 45 °, de préférence entre 10 ° et 30 °, plus préférentiellement entre 15 ° et 25 °, de manière particulièrement préférée de env. 20 °, par rapport à la direction longitudinale de la bobine.

2. Dispositif de fabrication (11) pour une bobine (7) selon la revendication 1, **caractérisé en ce que** la première section (17) présente un angle périphérique compris entre 80 ° et 120 °, de préférence entre 90 ° et 110 °, de manière particulièrement préférée de env. 105 °, et la deuxième section (18) présente un angle périphérique compris entre 90 ° et 130 °, de préférence entre 100 ° et 120 °, de manière particulièrement préférée de env. 115 °.

3. Procédé de production d'une bobine (7), dans lequel la bobine (7) présente une pluralité d'enroulements (8), dans lequel la bobine est pliée sur un corps façonné (9) selon la revendication 1, dans lequel une première section (23) est formée par application contre la première section (17) du corps façonné (9), laquelle première section constitue un arc de cercle (21), et une deuxième section (24) est formée par application contre la deuxième section (18) du corps façonné (9), laquelle deuxième section constitue une corde de cercle (22), et l'arc de cercle (21) et la corde de cercle (22) sont contigus.

4. Procédé selon la revendication 3, dans lequel la bobine (7) est tirée, dans lequel la bobine (7) présente, dans la deuxième section (24) dotée d'une forme de corde de cercle, des enroulements (8) dont la distance les uns par rapport aux autres est inférieure à une distance les uns par rapports aux autres dans le cas d'une forme d'arc de cercle dans la deuxième section.

5. Procédé selon l'une des revendications 3 ou 4, dans lequel la bobine (7) forme un pas continu (25) du fait de la traction dans la zone de la tête de bobine.

6. Procédé selon l'une des revendications 3 à 5, dans lequel un dispositif de fabrication (11) selon l'une des revendications 1 ou 2 est utilisé.

7. Stator (2) d'une machine électrique (1), lequel présente une bobine (7) qui est pliée au préalable en forme d'arc de cercle et en forme de corde de cercle selon l'un des procédés des revendications 3 à 6.
